(19) Europäisches Patentamt / European Patent Office / Office européen des brevets

(11) **EP 3 511 638 A1**

(12) **EUROPEAN PATENT APPLICATION**
published in accordance with Art. 153(4) EPC

(43) Date of publication:
**17.07.2019 Bulletin 2019/29**

(51) Int Cl.:
***F24F 11/30*** (2018.01)

(21) Application number: **16915746.8**

(22) Date of filing: **12.09.2016**

(86) International application number:
**PCT/JP2016/076778**

(87) International publication number:
**WO 2018/047328 (15.03.2018 Gazette 2018/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technomirai Co., Ltd**
**Tokyo 169-0075 (JP)**

(72) Inventor: **MIWA, Kazuo**
**Tokyo 169-0075 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **DIGITAL SMART ENERGY SAVING SYSTEM, METHOD, AND PROGRAM**

(57)   Provided is a digital smart energy saving system, method, and program capable of easily and accurately performing indoor air-conditioning control at low cost. A digital smart energy saving system (100) comprises an enthalpy calculating unit (121) that inputs a temperature and a humidity of indoor air and calculates an enthalpy being a total wet air heating value of the indoor air based on the input temperature and humidity of the indoor air, and the number of people in room estimating means (122) that estimates the number of people in a room based on the enthalpy of the indoor air calculated, and an air-conditioning control unit (120) controls air-conditioning based on the calculated enthalpy of the indoor air and the number of people in a room calculated.

FIG. 1

**Description**

[Technical Field]

The present invention relates to a digital smart energy saving system, method, and program.

[Background Art]

Air-conditioning-related energy accounts for about a half of energy consumed in an entire building facility such as a commercial facility, a complex facility, a hotel, a hospital, a university, a terminal, an airport, a cultural facility, an underground mall, an office, and a dwelling house, etc., and promotion of air-conditioning-related energy saving (hereinafter, referred to as energy saving) greatly contributes to energy saving in building facilities. Therefore, it is required for air-conditioning and heat source systems to perform economical and efficient operations with respect to indoor utilization forms, and to realize this, it is required to estimate an indoor heat load in real time. Until now, from the viewpoint of air-conditioning-related energy saving, many heat load estimation devices have been proposed. Proposed examples include one that prepares a heat load pattern as a standard in advance and performs estimation of a heat load.
PTL 1 describes a heat load estimation device to which historic power consumption of various devices equipped in a room, a heat load pattern consisting of time-series maximum heat loads in the room, and power consumption of various devices in the room are input, and which estimates a heat load in the room at a corresponding time based on the historic power consumption, the heat load pattern, and the power consumption, and outputs an estimated heat load value as a result of estimation. The heat load estimation device described in PTL 1 detects the number of people in a room by image processing using an infrared sensor and/or an camera that detect entering and leaving of people (paragraph 0079).

[Citation List]

[Patent Literature]

[PTL 1] JP 2015-152179 A

[Summary of Invention]

[Technical Problem]

However, such a conventional heat load estimation device is configured to estimate the number of people in a room by an infrared sensor, a camera and a CO2 concentration sensor, so that when grasping the number of people in a room, a sensor and a camera are needed, and this requires a high cost. In order to accurately grasp the number of people in a room, not only are a plurality of sensors and cameras required, but it is also necessary to process a determination on entering and leaving, etc., highly accurately in real time based on this sensor information, and this increases the cost. Even if the number of people in a room can be accurately grasped, the people may include children, and therefore, an accurate heat load cannot always be estimated based on the grasped number of people in a room.
An object of the present invention is to provide a digital smart energy saving system, method, and program capable of easily and accurately performing indoor air-conditioning control at low cost.

[Solution to Problem]

A digital smart energy saving system according to the present invention comprises an enthalpy calculating means that inputs a temperature and a humidity of indoor air and calculates an enthalpy being a total wet air heating value of the indoor air based on the input temperature and humidity of the indoor air, and an air-conditioning control means that controls air-conditioning based on the enthalpy of the indoor air calculated by the enthalpy calculating means.
With this configuration, air-conditioning control can be changed according to the calculated enthalpy of the indoor air, and energy saving can be realized.
The air-conditioning control means controlling air-conditioning and ventilation based on the enthalpy can realize energy saving of air-conditioning and energy saving of ventilation.
The digital smart energy saving system comprises a number of people in room estimating means that estimates the number of people in a room based on the enthalpy of the indoor air calculated by the enthalpy calculating means, and the air-conditioning control means can change air-conditioning control depending on whether the number of people in a room is large or small by controlling air-conditioning based on the number of people in a room calculated by the number of people in room estimating means, which enables performing comfortable air-conditioning at minimum necessary energy. In addition, indoor air-conditioning control can be easily and accurately performed at low cost.

The digital smart energy saving system comprises a $CO_2$ concentration measuring means that measures an indoor $CO_2$ concentration, and the number of people in room estimating means can more accurately estimate a heat load by using the $CO_2$ concentration measured by the $CO_2$ concentration measuring means.

When the input temperature of the indoor air exceeds a set temperature, the air-conditioning control means can comfortably control an environment without excessive energy saving by releasing its control.

A digital smart energy saving method according to the present invention comprises an enthalpy calculating step of inputting a temperature and a humidity of indoor air, and based on the input temperature and humidity of the indoor air, calculating an enthalpy being a total wet air heating value of the indoor air, and a control step of controlling air-conditioning based on the enthalpy of the indoor air calculated in the enthalpy calculating step.

In addition, the present invention provides a program to make a computer function as a digital smart energy saving system comprising an enthalpy calculating means that inputs a temperature and a humidity of indoor air and calculates an enthalpy being a total wet air heating value of the indoor air based on the input temperature and humidity of the indoor air, and an air-conditioning control means that controls air-conditioning based on the enthalpy of the indoor air calculated by the enthalpy calculating means.

[Advantageous Effects of Invention]

According to the present invention, indoor air conditioning can be easily and accurately controlled at low cost based on an enthalpy calculated from an indoor temperature and humidity.

[Brief Description of Drawings]

Fig. 1 is a block diagram showing a configuration of a digital smart energy saving system according to an embodiment of the present invention.
Fig. 2 is a diagram showing an overall configuration of the digital smart energy saving system according to the embodiment of the present invention.
Fig. 3 is a flowchart showing air-conditioning energy saving control processing of the digital smart energy saving system according to the embodiment of the present invention.

[Description of Embodiments]

Hereinafter, an embodiment to carry out the present invention is described in detail with reference to the accompanying drawings.

(Embodiment)

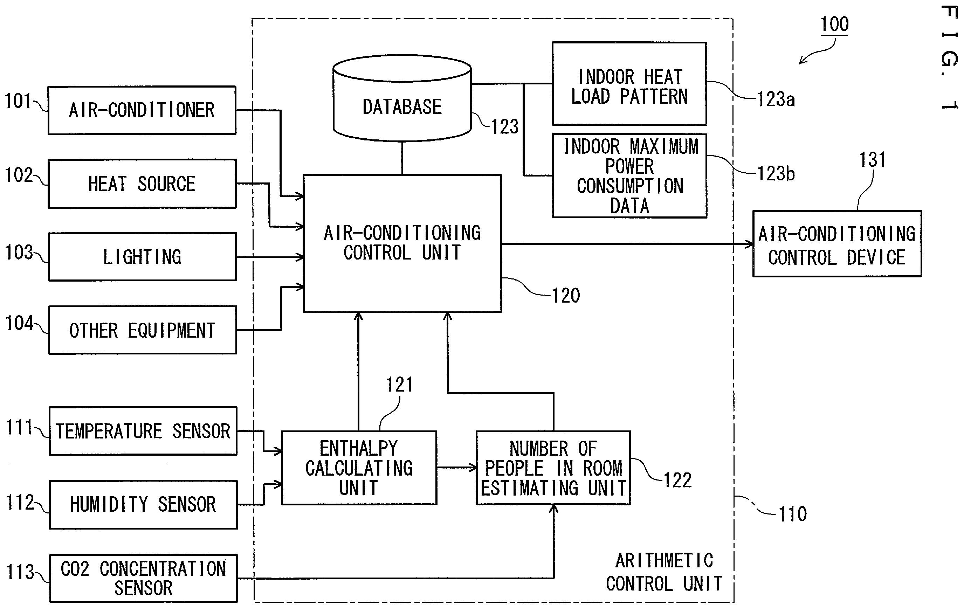

Fig. 1 is a block diagram showing a configuration of a digital smart energy saving system according to an embodiment of the present invention.

The present embodiment is an example of application to a digital smart energy saving system realized by a computer that manages energy such as electric power to be consumed in a building in an optimal state, and promotes energy saving.

In the present invention, "indoor" connotes the interior of a whole building, the interior of each floor, each of area systems of air-conditioning equipment or ventilation equipment, and an unpartitioned partial region in a room.

As shown in Fig. 1, the digital smart energy saving system 100 is installed in a building being an energy saving target.

The digital smart energy saving system 100 comprises an air-conditioner 101, a heat source device 102, a lighting (lighting equipment) 103, other equipment 104, a temperature sensor 111 that detects a temperature of indoor air, a humidity sensor 112 that detects a humidity of indoor air, a $CO_2$ concentration sensor 113 ($CO_2$ concentration measuring means) that detects a $CO_2$ concentration, an air-conditioning control unit 120 (air-conditioning control means), an enthalpy calculating unit 121 (enthalpy calculating means), the number of people in room estimating unit 122 (number of people in room estimating means), a database 123, and an air-conditioning control device 131 (air-conditioning control means). In the database 123, an indoor heat load pattern 123a and indoor maximum power consumption data 123b are stored.

The air-conditioning control unit 120, the enthalpy calculating unit 121, the number of people in room estimating unit 122, and the database 123 are constructed by an arithmetic control unit 110 such as a personal computer. The arithmetic control unit 110 comprises a CPU (Central Processing Unit), etc., and controls the entire system and makes the entire system function as a digital smart energy saving system by executing a digital smart energy saving program.

The air-conditioning control device 131 receives a control value and control conditions transmitted from the air-conditioning control unit 120, and controls control target devices including the air-conditioner 101 and the heat source device 102, etc.

<Power consumption>

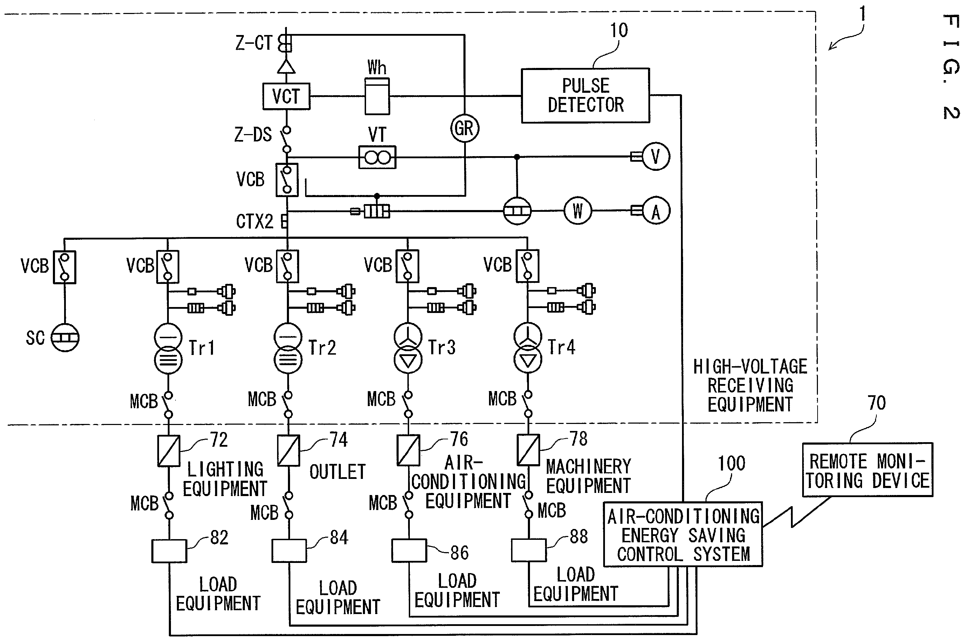

In the air-conditioner 101, a watthour meter (not shown) that measures a power consumption of the air-conditioner is installed, in the heat source device 102, a watthour meter (not shown) that measures a power consumption of the heat source device is installed, in the lighting 103, a watthour meter (not shown) that measures a power consumption of the lighting is installed, and in the other equipment 104, a watthour meter (not shown) that measures a power consumption of the other equipment is installed, and these watthour meters measure power consumption of the respective devices/equipment. The respective watthour meter measurements obtained are transmitted to the air-conditioning control unit 120. A power consumption in a building measured by a pulse detector 10 (refer to Fig. 2, described later) is transmitted to the air-conditioning control unit 120. In combination with the air-conditioner 101, outside air processing equipment being ventilation equipment may be provided. In this case, a ventilation volume of the outside air processing equipment, that is, an outside air volume to flow-in is also controlled by the air-conditioning control unit 120.

<Heat load pattern and maximum heat load>

An indoor heat load pattern 123a is time-series data on indoor maximum heat load in a day prepared based on, for example, a heat load calculation sheet. The heat load calculation sheet is referred to when a heat load is calculated from outside air conditions such as an atmospheric temperature and insolation, and indoor conditions such as an indoor floor area, a capacity, an outer wall structural body, the number of people, and lighting, and other heat loads (insolation load, etc.). A heat load calculation sheet is generally used when designing air-conditioning equipment, and therefore, an indoor maximum heat load is provided in the calculation sheet.

The indoor maximum power consumption 123b is a total value of maximum power consumption of various devices installed indoors calculated based on ratings, etc., of the air-conditioner 101, the heat source device 102, the lighting 103, and the other equipment 104. Herein, the indoor heat load pattern 123a is prepared based on the heat load calculation sheet, however, not limited to this, it is only required to be a heat load pattern when power consumption of the various devices installed indoors are maximized.

Load calculation for a target building is as follows.

(1) As for a calculation of equipment capacity of a building, configurations, capacities, and types of electric equipment and machinery equipment are determined by internal and external factors such as purposes of use, functions, scales, and locations, etc.

(2) Energy values to be consumed in a building by the electric equipment and machinery equipment are at the time of maximum accommodation in the building and maximum operation in terms of usage. In terms of climate phenomena, energy values are maximized in midsummer and midwinter, and in terms of time, energy values are maximized in daytime and midnight.

(3) Capacities of air-conditioning and ventilation equipment installed in a target building are also calculated. A load of ventilation equipment depends on the number of people in the building, etc., and by estimating the load in an actual usage situation, a surplus is calculated.

For a capacity of the electric equipment or machinery equipment as of construction, a maximum load value is set that is obtained by totaling a maximum value of energy to be consumed in the building and an expected value of the capacity estimated in consideration of aged deterioration and layout changes, etc.

<Sensors>

The temperature sensor 111 is installed indoors, and detects a temperature of indoor air and inputs it to the arithmetic control unit 110.

The humidity sensor 112 is installed indoors, and detects a humidity of indoor air and inputs it to the arithmetic control unit 110.

The $CO_2$ concentration sensor 113 is installed indoors, and measures a $CO_2$ concentration in air. In the present embodiment, the number of people in a room is estimated without using the $CO_2$ concentration sensor 113, so that the CO2 concentration sensor 113 is not essential for the configuration of this system.

<Enthalpy calculating unit 121>

The enthalpy calculating unit 121 calculates an enthalpy (also called specific enthalpy) being a total wet air heating value of indoor air based on an input temperature and humidity of the indoor air. The enthalpy in the present embodiment represents an enthalpy that 1 kg of a substance (air) has, and units of enthalpy is (kJ/kg).
Table 1 shows a relationship among the temperature, the humidity, and the enthalpy by way of example. The enthalpy is shown by weight absolute humidity.

[Table 1]

Table 1

| Temperature(°C) | 22.0 | 22.0 | 22.0 | 22.0 | 25.0 | 25.0 | 25.0 | 25.0 | 28.0 | 28.0 | 28.0 | 28.0 |
|---|---|---|---|---|---|---|---|---|---|---|---|---|
| Humidity(%) | 40.0 | 42.0 | 44.0 | 48.0 | 50.0 | 52.0 | 54.0 | 58.0 | 60.0 | 62.0 | 64.0 | 68.0 |
| Enthalpy (kJ/kgD.A.) | 38.8 | 39.6 | 40.5 | 42.1 | 50.3 | 51.3 | 52.3 | 54.4 | 64.5 | 65.7 | 67.0 | 69.4 |

<Number of people in room estimating unit 122>

The number of people in room estimating unit 122 estimates the number of people in a room based on an enthalpy of indoor air. The number of people in room estimating unit 122 estimates the number of people in a room by using an enthalpy calculated from a temperature and a humidity.
The enthalpy depends on the number of people in a room per floor area, so that for each room, relationships between various actual numbers of people in a room and enthalpies at the corresponding times are recorded in a table in advance, and based on this table, the number of people in a room can be estimated from a corresponding enthalpy. In actuality, errors can occur and the number of people in a room and enthalpies are not of a one-to-one correspondence, however, the approximate number of people in a room can be estimated from a corresponding enthalpy.
Table 2, Table 3, and Table 4 show detailed examples of the temperature (°C), the humidity (%), and the enthalpy (kJ/kg D.A.).
Table 2 shows detailed examples of holidays in a certain store in 2015. The holidays are calendar holidays, such as Saturdays, Sundays, public holidays, and national vacation (New Year's holidays, etc.). For a heating period from December to March and a cooling period from April to November, detailed examples of monthly means of temperatures (°C), humidities (%), and enthalpies (kJ/kg D.A.) at each time in hours from 9 to 21 are shown. The "Mean" in the heating period represents a mean per the heating period, the "Mean" in the cooling period represents a mean per the cooling period, the "Ann Mean" represents a mean per year, and the "Mean" in the three lowest rows represents a mean in hours from 9 to 12. Generally, customers tend to increase on holidays, and the number of people in a room also tends to increase.
Table 3 shows detailed examples of weekdays. The weekdays are days other than holidays.
Table 4 shows weighted means per holidays and weekdays (weighted by the number of days). "Holidays/Weekdays" means "mean per holidays (Table 2)/mean per weekdays (Table 3)."

[Table 2]

Table 2

| Hour | Month | Holidays in heating period | | | | | Holidays in cooling period | | | | | | | | | Ann Avr |
| | | 12 | 1 | 2 | 3 | Avr | 4 | 5 | 6 | 7 | 8 | 9 | 10 | 11 | Avr | |
|---|---|---|---|---|---|---|---|---|---|---|---|---|---|---|---|---|
| 9 | Tem | 19.7 | 20.7 | 18.4 | 18.6 | 19.4 | 20.6 | 21.1 | 22.1 | 23.9 | 24.2 | 22.7 | 22.2 | 21.2 | 22.3 | 21.3 |
| | Hum | 40.0 | 30.6 | 36.9 | 42.0 | 37.4 | 37.5 | 48.6 | 53.6 | 55.9 | 50.8 | 49.1 | 40.5 | 48.3 | 48.0 | 44.5 |
| | Enth | 34.3 | 32.6 | 30.8 | 32.9 | 32.7 | 34.9 | 40.3 | 44.9 | 50.5 | 48.8 | 44.4 | 39.5 | 40.5 | 43.0 | 39.5 |
| 10 | Tem | 20.5 | 20.5 | 19.0 | 19.2 | 19.8 | 21.0 | 21.5 | 22.7 | 24.5 | 24.3 | 23.0 | 22.8 | 21.6 | 22.7 | 21.7 |
| | Hum | 38.8 | 29.9 | 35.9 | 40.9 | 36.4 | 37.0 | 48.1 | 52.2 | 56.6 | 51.1 | 49.6 | 40.6 | 48.5 | 48.0 | 44.1 |
| | Enth | 35.4 | 31.9 | 31.6 | 33.6 | 33.1 | 35.5 | 41.2 | 45.7 | 52.3 | 49.3 | 45.2 | 40.7 | 41.5 | 43.9 | 40.3 |
| 11 | Tem | 19.5 | 20.7 | 18.5 | 18.9 | 19.4 | 20.9 | 21.8 | 23.0 | 24.6 | 24.7 | 23.3 | 23.0 | 20.9 | 22.8 | 21.7 |
| | Hum | 41.1 | 29.9 | 37.2 | 41.5 | 37.4 | 37.7 | 47.9 | 52.4 | 58.1 | 53.6 | 51.0 | 41.1 | 50.8 | 49.1 | 45.2 |
| | Enth | 34.3 | 32.2 | 31.1 | 33.3 | 32.7 | 35.6 | 41.6 | 46.5 | 53.4 | 51.4 | 46.5 | 41.5 | 41.0 | 44.7 | 40.7 |
| 12 | Tem | 19.7 | 20.8 | 18.1 | 18.8 | 19.4 | 21.0 | 22.0 | 23.3 | 24.9 | 25.0 | 23.6 | 23.3 | 21.2 | 23.0 | 21.8 |
| | Hum | 40.8 | 29.9 | 37.9 | 42.1 | 37.7 | 38.4 | 47.1 | 51.7 | 57.4 | 53.9 | 50.5 | 40.9 | 50.5 | 48.8 | 45.1 |
| | Enth | 34.6 | 32.3 | 30.4 | 33.3 | 32.7 | 36.0 | 41.8 | 46.9 | 53.8 | 52.3 | 47.0 | 42.0 | 41.4 | 45.2 | 41.0 |
| 13 | Tem | 19.7 | 20.8 | 18.1 | 18.8 | 19.4 | 21.2 | 22.3 | 23.5 | 25.1 | 25.2 | 23.8 | 23.6 | 21.1 | 23.2 | 21.9 |
| | Hum | 42.4 | 30.8 | 38.4 | 43.4 | 38.8 | 38.6 | 47.0 | 51.1 | 57.9 | 54.0 | 50.5 | 41.0 | 51.0 | 48.9 | 45.5 |
| | Enth | 34.6 | 32.3 | 30.4 | 33.3 | 32.7 | 36.6 | 42.4 | 47.2 | 54.7 | 52.9 | 47.5 | 42.6 | 41.4 | 45.7 | 41.3 |
| 14 | Tem | 19.8 | 21.1 | 18.5 | 18.8 | 19.6 | 21.5 | 22.5 | 23.7 | 25.2 | 25.4 | 24.0 | 23.9 | 21.3 | 23.4 | 22.1 |
| | Hum | 42.0 | 30.1 | 37.9 | 43.3 | 38.3 | 38.3 | 46.6 | 51.2 | 57.7 | 53.6 | 50.0 | 40.6 | 51.4 | 48.7 | 45.2 |
| | Enth | 35.2 | 33.0 | 31.2 | 33.7 | 33.3 | 37.1 | 42.8 | 47.6 | 54.8 | 53.2 | 47.8 | 43.1 | 42.1 | 46.1 | 41.8 |
| 15 | Tem | 19.9 | 21.0 | 18.6 | 18.9 | 19.6 | 21.6 | 22.8 | 23.8 | 25.4 | 25.5 | 24.1 | 24.1 | 21.5 | 23.6 | 22.3 |
| | Hum | 42.2 | 30.0 | 37.9 | 43.2 | 38.3 | 38.3 | 46.9 | 51.5 | 56.1 | 54.0 | 49.8 | 40.4 | 52.0 | 48.6 | 45.2 |
| | Enth | 35.5 | 32.8 | 31.5 | 33.9 | 33.4 | 37.2 | 43.5 | 48.2 | 54.6 | 53.8 | 48.0 | 43.4 | 42.6 | 46.4 | 42.1 |

(continued)

| Hour | Month | Holidays in heating period | | | | | Holidays in cooling period | | | | | | | | | Ann Avr |
|---|---|---|---|---|---|---|---|---|---|---|---|---|---|---|---|---|
| | | 12 | 1 | 2 | 3 | Avr | 4 | 5 | 6 | 7 | 8 | 9 | 10 | 11 | Avr | |
| 16 | Tem | 19.7 | 21.2 | 18.6 | 19.1 | 19.7 | 21.7 | 23.0 | 23.9 | 25.5 | 25.7 | 24.2 | 24.3 | 21.6 | 23.7 | 22.4 |
| | Hum | 42.7 | 30.1 | 38.4 | 43.4 | 38.6 | 38.6 | 46.9 | 51.7 | 56.9 | 53.7 | 50.4 | 40.3 | 52.4 | 48.9 | 45.5 |
| | Enth | 35.5 | 32.8 | 31.5 | 33.9 | 33.4 | 37.6 | 44.1 | 48.4 | 55.2 | 54.1 | 48.6 | 43.8 | 42.6 | 46.8 | 42.3 |
| 17 | Tem | 19.9 | 21.3 | 18.9 | 19.2 | 19.8 | 22.0 | 23.0 | 23.9 | 25.5 | 25.7 | 24.2 | 24.3 | 21.7 | 23.8 | 22.5 |
| | Hum | 42.7 | 29.8 | 37.5 | 42.2 | 38.0 | 37.6 | 46.8 | 51.6 | 56.7 | 52.8 | 50.5 | 40.3 | 51.6 | 48.5 | 45.0 |
| | Enth | 35.7 | 33.2 | 31.9 | 34.2 | 33.8 | 37.7 | 44.1 | 48.2 | 55.1 | 53.6 | 48.6 | 43.9 | 43.1 | 46.8 | 42.4 |
| 18 | Tem | 19.6 | 21.2 | 18.6 | 19.3 | 19.7 | 21.8 | 22.7 | 23.6 | 25.2 | 25.3 | 24.1 | 24.3 | 21.5 | 23.6 | 22.3 |
| | Hum | 41.0 | 28.8 | 36.6 | 41.5 | 37.0 | 36.6 | 46.9 | 51.6 | 55.9 | 52.4 | 49.9 | 39.6 | 49.1 | 47.8 | 44.2 |
| | Enth | 34.5 | 32.7 | 31.0 | 34.1 | 33.1 | 36.9 | 43.4 | 47.6 | 53.8 | 52.5 | 48.0 | 43.5 | 41.5 | 45.9 | 41.6 |
| 19 | Tem | 19.9 | 21.4 | 18.3 | 19.2 | 19.7 | 21.7 | 22.5 | 23.5 | 24.9 | 25.1 | 24.0 | 24.2 | 21.6 | 23.4 | 22.2 |
| | Hum | 42.2 | 29.2 | 38.2 | 42.5 | 38.0 | 36.9 | 46.8 | 51.5 | 55.5 | 53.2 | 49.8 | 39.8 | 50.3 | 48.0 | 44.7 |
| | Enth | 35.4 | 33.1 | 31.0 | 34.1 | 33.4 | 36.9 | 42.8 | 47.2 | 52.8 | 52.4 | 47.9 | 43.3 | 42.3 | 45.7 | 41.6 |
| 20 | Tem | 19.7 | 21.5 | 18.4 | 19.2 | 19.7 | 21.5 | 22.2 | 23.3 | 24.6 | 24.9 | 23.9 | 24.1 | 21.6 | 23.3 | 22.1 |
| | Hum | 40.8 | 28.4 | 37.5 | 41.9 | 37.1 | 36.0 | 46.4 | 50.5 | 55.0 | 51.2 | 49.6 | 38.7 | 49.3 | 47.1 | 43.8 |
| | Enth | 34.6 | 33.1 | 30.9 | 33.9 | 33.1 | 36.2 | 41.9 | 46.3 | 51.9 | 50.7 | 47.5 | 42.7 | 41.8 | 44.9 | 41.0 |
| 21 | Tem | 19.6 | 21.5 | 18.4 | 19.1 | 19.7 | 21.5 | 22.0 | 23.2 | 24.4 | 24.7 | 23.9 | 24.0 | 21.4 | 23.1 | 22.0 |
| | Hum | 40.9 | 27.8 | 37.4 | 41.2 | 36.8 | 35.3 | 46.3 | 49.9 | 54.5 | 51.9 | 50.1 | 38.9 | 49.3 | 47.0 | 43.6 |
| | Enth | 34.4 | 32.7 | 30.9 | 33.5 | 32.9 | 35.8 | 41.5 | 45.7 | 51.1 | 50.6 | 47.6 | 42.6 | 41.4 | 44.5 | 40.7 |
| Avr | Tem | 19.8 | 21.1 | 18.5 | 19.0 | 19.6 | 21.4 | 22.3 | 23.3 | 24.9 | 25.1 | 23.8 | 23.7 | 21.4 | 23.2 | 22.0 |
| | Hum | 41.3 | 29.6 | 37.5 | 42.2 | 37.7 | 37.4 | 47.1 | 51.6 | 56.5 | 52.8 | 50.1 | 40.2 | 50.3 | 48.2 | 44.7 |
| | Enth | 34.9 | 32.7 | 31.1 | 33.7 | 33.1 | 36.5 | 42.4 | 47.0 | 53.4 | 52.0 | 47.3 | 42.5 | 41.8 | 45.3 | 41.3 |

Avr: Average AnnAvr: Annual Average Tem: Temperature Hum: Humidity Enth: Enthalpy

[Table 3]

[Table 3]

Table 3

| Hour | Month | Weekdays in heating period | | | | | Weekdays in cooling period | | | | | | | | | Ann Avr |
| | | 12 | 1 | 2 | 3 | Avr | 4 | 5 | 6 | 7 | 8 | 9 | 10 | 11 | Avr | |
|---|---|---|---|---|---|---|---|---|---|---|---|---|---|---|---|---|
| 9 | Tem | 18.3 | 19.4 | 17.2 | 17.4 | 18.1 | 21.4 | 20.8 | 22.1 | 23.7 | 23.9 | 22.4 | 21.9 | 19.7 | 22.0 | 20.7 |
| | Hum | 40.0 | 30.6 | 36.9 | 42.0 | 37.4 | 31.8 | 43.2 | 47.2 | 50.6 | 46.2 | 44.8 | 36.1 | 48.3 | 43.5 | 41.5 |
| | Enth | 31.7 | 30.3 | 28.7 | 30.6 | 30.3 | 34.3 | 37.6 | 42.0 | 47.3 | 45.7 | 41.7 | 37.0 | 37.3 | 40.4 | 37.0 |
| 10 | Tem | 19.1 | 19.7 | 17.7 | 17.9 | 18.6 | 21.7 | 21.2 | 22.5 | 24.1 | 24.0 | 22.6 | 22.4 | 20.0 | 22.3 | 21.1 |
| | Hum | 38.8 | 29.9 | 35.9 | 40.9 | 36.4 | 31.7 | 42.4 | 46.2 | 50.5 | 46.0 | 45.1 | 35.6 | 48.5 | 43.2 | 41.0 |
| | Enth | 32.7 | 30.5 | 29.2 | 31.2 | 30.9 | 34.8 | 38.1 | 42.5 | 48.2 | 45.7 | 42.3 | 37.8 | 38.0 | 40.9 | 37.6 |
| 11 | Tem | 18.3 | 19.7 | 17.4 | 17.6 | 18.3 | 21.6 | 21.4 | 22.7 | 24.2 | 24.2 | 22.9 | 22.7 | 19.6 | 22.4 | 21.0 |
| | Hum | 41.1 | 29.9 | 37.2 | 41.5 | 37.4 | 32.1 | 42.0 | 46.6 | 52.0 | 48.0 | 45.4 | 35.6 | 50.8 | 44.1 | 41.9 |
| | Enth | 32.0 | 30.6 | 29.1 | 30.8 | 30.6 | 34.7 | 38.4 | 43.2 | 49.1 | 47.4 | 43.0 | 38.3 | 37.9 | 41.5 | 37.9 |
| 12 | Tem | 18.6 | 19.7 | 16.9 | 17.5 | 18.2 | 21.5 | 21.6 | 23.0 | 24.4 | 24.5 | 23.1 | 23.0 | 19.7 | 22.6 | 21.1 |
| | Hum | 40.8 | 29.9 | 37.9 | 42.1 | 37.7 | 32.9 | 41.2 | 46.4 | 51.8 | 48.1 | 45.9 | 35.0 | 50.5 | 44.0 | 41.9 |
| | Enth | 32.4 | 30.6 | 28.4 | 30.7 | 30.5 | 34.9 | 38.5 | 43.7 | 49.5 | 48.2 | 43.7 | 38.7 | 38.1 | 41.9 | 38.1 |
| 13 | Tem | 18.5 | 19.7 | 17.2 | 17.5 | 18.2 | 21.5 | 21.9 | 23.1 | 24.5 | 24.7 | 23.3 | 23.3 | 20.1 | 22.8 | 21.3 |
| | Hum | 42.4 | 30.8 | 38.4 | 43.4 | 38.8 | 33.7 | 41.4 | 46.1 | 51.8 | 47.8 | 46.2 | 35.4 | 51.0 | 44.2 | 42.4 |
| | Enth | 32.8 | 31.0 | 29.0 | 31.2 | 31.0 | 35.1 | 39.1 | 43.9 | 50.0 | 48.4 | 44.3 | 39.3 | 39.0 | 42.4 | 38.6 |
| 14 | Tem | 18.6 | 20.0 | 17.3 | 17.6 | 18.4 | 21.7 | 22.1 | 23.3 | 24.7 | 24.9 | 23.4 | 23.7 | 20.1 | 23.0 | 21.4 |
| | Hum | 42.0 | 30.1 | 37.9 | 43.3 | 38.3 | 33.9 | 40.9 | 45.9 | 51.8 | 47.9 | 45.3 | 34.5 | 51.4 | 43.9 | 42.1 |
| | Enth | 32.7 | 31.2 | 29.1 | 31.4 | 31.1 | 35.5 | 39.4 | 44.1 | 50.5 | 48.9 | 44.2 | 39.7 | 39.2 | 42.7 | 38.8 |
| 15 | Tem | 18.7 | 20.0 | 17.4 | 17.8 | 18.5 | 21.6 | 22.3 | 23.4 | 25.0 | 25.0 | 23.5 | 23.8 | 20.1 | 23.1 | 21.6 |
| | Hum | 42.2 | 30.0 | 37.9 | 43.2 | 38.3 | 34.1 | 41.2 | 46.2 | 50.7 | 48.0 | 45.1 | 34.7 | 52.0 | 44.0 | 42.1 |
| | Enth | 33.1 | 31.1 | 29.2 | 31.8 | 31.3 | 35.5 | 40.0 | 44.6 | 50.5 | 49.3 | 44.4 | 40.1 | 39.6 | 43.0 | 39.1 |

| Hour | Month | Weekdays in heating period | | | | | Weekdays in cooling period | | | | | | | | | Ann Avr |
|------|-------|------|------|------|------|------|------|------|------|------|------|------|------|------|------|------|
| | | 12 | 1 | 2 | 3 | Avr | 4 | 5 | 6 | 7 | 8 | 9 | 10 | 11 | Avr | |
| 16 | Tem | 18.6 | 20.3 | 17.4 | 18.0 | 18.6 | 21.7 | 22.5 | 23.5 | 25.1 | 25.2 | 23.6 | 24.0 | 20.1 | 23.2 | 21.7 |
| | Hum | 42.7 | 30.1 | 38.4 | 43.4 | 38.6 | 34.0 | 41.6 | 46.5 | 51.2 | 48.2 | 45.5 | 34.7 | 52.4 | 44.3 | 42.4 |
| | Enth | 33.0 | 31.6 | 29.4 | 32.1 | 31.5 | 35.7 | 40.5 | 44.9 | 51.1 | 49.7 | 44.7 | 40.5 | 39.5 | 43.3 | 39.4 |
| 17 | Tem | 18.6 | 20.2 | 17.6 | 18.1 | 18.6 | 21.8 | 22.5 | 23.5 | 25.1 | 25.2 | 23.6 | 23.9 | 20.2 | 23.2 | 21.7 |
| | Hum | 42.7 | 29.8 | 37.5 | 42.2 | 38.0 | 33.1 | 41.5 | 46.1 | 50.5 | 46.6 | 45.5 | 34.7 | 51.6 | 43.7 | 41.8 |
| | Enth | 33.0 | 31.4 | 29.4 | 31.9 | 31.4 | 35.5 | 40.5 | 44.8 | 50.8 | 48.9 | 44.6 | 40.3 | 39.7 | 43.1 | 39.2 |
| 18 | Tem | 18.6 | 20.4 | 17.4 | 17.9 | 18.6 | 21.7 | 22.3 | 23.3 | 24.8 | 24.8 | 23.5 | 23.9 | 20.3 | 23.1 | 21.6 |
| | Hum | 41.0 | 28.8 | 36.6 | 41.5 | 37.0 | 32.4 | 41.1 | 46.0 | 49.3 | 47.2 | 45.6 | 33.4 | 49.1 | 43.0 | 41.0 |
| | Enth | 32.5 | 31.3 | 28.9 | 31.4 | 31.0 | 35.0 | 39.8 | 44.3 | 49.4 | 48.4 | 44.5 | 39.6 | 38.8 | 42.5 | 38.6 |
| 19 | Tem | 18.7 | 20.8 | 17.2 | 18.0 | 18.7 | 21.5 | 22.0 | 23.2 | 24.5 | 24.6 | 23.4 | 23.7 | 20.1 | 22.9 | 21.5 |
| | Hum | 42.2 | 29.2 | 38.2 | 42.5 | 38.0 | 33.0 | 41.8 | 46.1 | 49.3 | 47.9 | 45.2 | 33.6 | 50.3 | 43.4 | 41.6 |
| | Enth | 33.0 | 32.1 | 29.1 | 31.8 | 31.5 | 34.9 | 39.6 | 44.0 | 48.6 | 48.2 | 44.2 | 39.4 | 38.9 | 42.2 | 38.7 |
| 20 | Tem | 18.8 | 20.9 | 17.3 | 18.0 | 18.7 | 21.4 | 21.8 | 23.0 | 24.3 | 24.4 | 23.4 | 23.9 | 20.1 | 22.8 | 21.4 |
| | Hum | 40.8 | 28.4 | 37.5 | 41.9 | 37.1 | 31.9 | 41.9 | 46.1 | 49.3 | 46.9 | 45.2 | 32.9 | 49.3 | 43.0 | 41.0 |
| | Enth | 32.7 | 31.9 | 28.9 | 31.6 | 31.3 | 34.4 | 39.1 | 43.6 | 48.1 | 47.3 | 44.1 | 39.3 | 38.6 | 41.8 | 38.3 |
| 21 | Tem | 18.5 | 20.9 | 17.1 | 17.9 | 18.6 | 21.3 | 21.6 | 22.8 | 24.1 | 24.3 | 23.3 | 23.7 | 20.1 | 22.7 | 21.3 |
| | Hum | 40.9 | 27.8 | 37.4 | 41.2 | 36.8 | 31.8 | 42.0 | 45.5 | 49.6 | 47.2 | 45.2 | 34.0 | 49.3 | 43.1 | 41.0 |
| | Enth | 32.3 | 31.7 | 28.7 | 31.2 | 31.0 | 34.1 | 38.9 | 43.0 | 47.7 | 47.1 | 43.9 | 39.5 | 38.5 | 41.6 | 38.1 |
| Avr | Tem | 18.6 | 20.1 | 17.3 | 17.8 | 18.5 | 21.6 | 21.9 | 23.0 | 24.5 | 24.6 | 23.2 | 23.4 | 20.0 | 22.8 | 21.3 |
| | Hum | 41.4 | 29.6 | 37.5 | 42.2 | 37.7 | 32.8 | 41.7 | 46.2 | 50.7 | 47.4 | 45.4 | 34.6 | 50.3 | 43.6 | 41.7 |
| | Enth | 32.6 | 31.2 | 29.0 | 31.4 | 31.0 | 34.9 | 39.2 | 43.7 | 49.3 | 47.9 | 43.8 | 39.2 | 38.7 | 42.1 | 38.4 |

Avr: Average AnnAvr: Annual Average Tem: Temperature Hum: Humidity Enth: Enthalpy

[Table 4]

[Table 4]

Table 4

| Hour | Month | .Weekdays + holidays in heating period | | | | | | .Weekdays + holidays in cooling period | | | | | | | | | |
| | | 12 | 1 | 2 | 3 | Avr | H/W | 4 | 5 | 6 | 7 | 8 | 9 | 10 | 11 | Avr | H/W |
|---|---|---|---|---|---|---|---|---|---|---|---|---|---|---|---|---|---|
| | Holy | 19 | 19 | 19 | 22 | | | 21 | 18 | 22 | 22 | 18 | 19 | 21 | 19 | | |
| | Week | 12 | 12 | 9 | 9 | | | 9 | 13 | 8 | 9 | 13 | 11 | 10 | 11 | | |
| 9 | Tem | 18.9 | 19.9 | 17.6 | 17.8 | 18.5 | 1.07 | 20.9 | 22.1 | 23.8 | 24.0 | 22.5 | 22.0 | 22.1 | 20.3 | 22.2 | 1.01 |
| | Hum | 40.0 | 30.6 | 36.9 | 42.0 | 37.4 | 1.00 | 44.8 | 49.9 | 52.0 | 47.5 | 46.6 | 37.7 | 45.0 | 48.3 | 46.5 | 1.10 |
| | Enth | 32.7 | 31.2 | 29.4 | 31.3 | 31.1 | 1.08 | 38.4 | 43.2 | 48.2 | 46.6 | 42.9 | 37.9 | 41.2 | 38.5 | 42.1 | 1.06 |
| 10 | Tem | 19.7 | 20.0 | 18.1 | 18.3 | 19.0 | 1.06 | 21.3 | 22.6 | 24.2 | 24.1 | 22.8 | 22.6 | 22.4 | 20.6 | 22.6 | 1.02 |
| | Hum | 38.8 | 29.9 | 35.9 | 40.9 | 36.4 | 1.00 | 44.1 | 48.7 | 52.1 | 47.5 | 47.0 | 37.4 | 44.8 | 48.5 | 46.3 | 1.11 |
| | Enth | 33.8 | 31.0 | 30.0 | 31.9 | 31.7 | 1.07 | 39.1 | 43.8 | 49.3 | 46.8 | 43.5 | 38.8 | 41.9 | 39.3 | 42.8 | 1.07 |
| 11 | Tem | 18.8 | 20.1 | 17.8 | 18.0 | 18.7 | 1.06 | 21.5 | 22.9 | 24.3 | 24.4 | 23.0 | 22.8 | 22.5 | 20.1 | 22.7 | 1.02 |
| | Hum | 41.1 | 29.9 | 37.2 | 41.5 | 37.4 | 1.00 | 43.8 | 49.0 | 53.6 | 49.6 | 47.8 | 37.6 | 45.7 | 50.8 | 47.2 | 1.11 |
| | Enth | 32.9 | 31.2 | 29.7 | 31.5 | 31.3 | 1.07 | 39.3 | 44.6 | 50.2 | 48.5 | 44.5 | 39.5 | 42.5 | 39.0 | 43.5 | 1.08 |
| 12 | Tem | 19.0 | 20.1 | 17.3 | 17.9 | 18.6 | 1.06 | 21.8 | 23.1 | 24.5 | 24.7 | 23.3 | 23.1 | 22.8 | 20.3 | 22.9 | 1.02 |
| | Hum | 40.8 | 29.9 | 37.9 | 42.1 | 37.7 | 1.00 | 43.0 | 48.6 | 53.3 | 49.8 | 47.8 | 37.2 | 45.5 | 50.5 | 47.0 | 1.11 |
| | Enth | 33.2 | 31.3 | 29.0 | 31.5 | 31.3 | 1.07 | 39.5 | 45.0 | 50.6 | 49.4 | 45.1 | 39.9 | 43.0 | 39.3 | 44.0 | 1.08 |
| 13 | Tem | 19.0 | 20.2 | 17.5 | 17.9 | 18.6 | 1.06 | 22.0 | 23.3 | 24.7 | 24.8 | 23.5 | 23.4 | 22.9 | 20.4 | 23.1 | 1.02 |
| | Hum | 42.4 | 30.8 | 38.4 | 43.4 | 38.8 | 1.00 | 43.1 | 48.2 | 53.4 | 49.6 | 48.0 | 37.5 | 45.7 | 51.0 | 47.1 | 1.11 |
| | Enth | 33.5 | 31.5 | 29.5 | 31.8 | 31.6 | 1.05 | 40.1 | 45.3 | 51.2 | 49.7 | 45.6 | 40.5 | 43.5 | 39.9 | 44.5 | 1.08 |
| 14 | Tem | 19.0 | 20.4 | 17.7 | 18.0 | 18.8 | 1.06 | 22.2 | 23.4 | 24.8 | 25.0 | 23.7 | 23.8 | 23.1 | 20.5 | 23.3 | 1.02 |
| | Hum | 42.0 | 30.1 | 37.9 | 43.3 | 38.3 | 1.00 | 42.6 | 48.1 | 53.4 | 49.5 | 47.2 | 36.7 | 45.5 | 51.4 | 46.8 | 1.11 |
| | Enth | 33.7 | 31.9 | 29.8 | 32.0 | 31.8 | 1.07 | 40.4 | 45.6 | 51.6 | 50.2 | 45.7 | 40.9 | 43.8 | 40.2 | 44.8 | 1.08 |
| 15 | Tem | 19.2 | 20.4 | 17.8 | 18.1 | 18.9 | 1.06 | 22.5 | 23.6 | 25.1 | 25.2 | 23.8 | 23.9 | 23.3 | 20.6 | 23.5 | 1.02 |
| | Hum | 42.2 | 30.0 | 37.9 | 43.2 | 38.3 | 1.00 | 42.9 | 48.4 | 52.2 | 49.7 | 47.1 | 36.8 | 45.5 | 52.0 | 46.8 | 1.10 |
| | Enth | 34.0 | 31.8 | 29.9 | 32.4 | 32.0 | 1.07 | 41.1 | 46.1 | 51.6 | 50.6 | 45.9 | 41.3 | 44.1 | 40.7 | 45.2 | 1.08 |

(continued)

| Hour | Month | .Weekdays + holidays in heating period | | | | | | .Weekdays + holidays in cooling period | | | | | | | | | |
|---|---|---|---|---|---|---|---|---|---|---|---|---|---|---|---|---|---|
| | | 12 | 1 | 2 | 3 | Avr | H/W | 4 | 5 | 6 | 7 | 8 | 9 | 10 | 11 | Avr | H/W |
| 16 | Tem | 19.0 | 20.6 | 17.8 | 18.3 | 18.9 | 1.06 | 22.7 | 23.7 | 25.2 | 25.3 | 23.9 | 24.1 | 23.4 | 20.6 | 23.6 | 1.02 |
| | Hum | 42.7 | 30.1 | 38.4 | 43.4 | 38.6 | 1.00 | 43.2 | 48.7 | 52.7 | 49.8 | 47.6 | 36.8 | 45.7 | 52.4 | 47.1 | 1.10 |
| | Enth | 34.0 | 32.1 | 30.1 | 32.6 | 32.2 | 1.06 | 41.6 | 46.4 | 52.2 | 51.0 | 46.4 | 41.7 | 44.5 | 40.6 | 45.5 | 1.08 |
| 17 | Tem | 19.1 | 20.6 | 18.0 | 18.4 | 19.0 | 1.07 | 22.7 | 23.7 | 25.2 | 25.3 | 23.8 | 24.1 | 23.4 | 20.8 | 23.6 | 1.02 |
| | Hum | 42.7 | 29.8 | 37.5 | 42.2 | 38.0 | 1.00 | 43.1 | 48.4 | 52.2 | 48.4 | 47.6 | 36.7 | 45.2 | 51.6 | 46.6 | 1.11 |
| | Enth | 34.0 | 32.1 | 30.2 | 32.5 | 32.2 | 1.07 | 41.6 | 46.2 | 51.9 | 50.3 | 46.3 | 41.6 | 44.3 | 40.9 | 45.4 | 1.08 |
| 18 | Tem | 19.0 | 20.7 | 17.8 | 18.3 | 19.0 | 1.06 | 22.4 | 23.4 | 24.9 | 25.0 | 23.8 | 24.0 | 23.2 | 20.7 | 23.4 | 1.02 |
| | Hum | 41.0 | 28.8 | 36.6 | 41.5 | 37.0 | 1.00 | 42.8 | 48.4 | 51.1 | 48.7 | 47.4 | 35.7 | 44.5 | 49.1 | 46.0 | 1.11 |
| | Enth | 33.2 | 31.8 | 29.6 | 32.2 | 31.7 | 1.07 | 40.9 | 45.7 | 50.6 | 49.6 | 46.0 | 41.0 | 43.6 | 39.8 | 44.6 | 1.08 |
| 19 | Tem | 19.1 | 21.0 | 17.6 | 18.3 | 19.0 | 1.06 | 22.2 | 23.3 | 24.6 | 24.8 | 23.7 | 23.9 | 23.1 | 20.7 | 23.3 | 1.02 |
| | Hum | 42.2 | 29.2 | 38.2 | 42.5 | 38.0 | 1.00 | 43.3 | 48.4 | 51.0 | 49.4 | 47.1 | 35.9 | 44.9 | 50.3 | 46.3 | 1.11 |
| | Enth | 34.0 | 32.5 | 29.7 | 32.5 | 32.2 | 1.06 | 40.6 | 45.4 | 49.7 | 49.4 | 45.8 | 40.8 | 43.4 | 40.2 | 44.4 | 1.08 |
| 20 | Tem | 19.1 | 21.1 | 17.6 | 18.3 | 19.1 | 1.05 | 21.9 | 23.1 | 24.4 | 24.5 | 23.6 | 24.0 | 22.9 | 20.7 | 23.1 | 1.02 |
| | Hum | 40.8 | 28.4 | 37.5 | 41.9 | 37.1 | 1.00 | 43.2 | 48.0 | 50.9 | 48.2 | 47.0 | 35.0 | 44.3 | 49.3 | 45.7 | 1.10 |
| | Enth | 33.5 | 32.4 | 29.5 | 32.3 | 31.9 | 1.06 | 40.0 | 44.7 | 49.1 | 48.3 | 45.5 | 40.6 | 42.8 | 39.8 | 43.8 | 1.07 |
| 21 | Tem | 18.9 | 21.1 | 17.5 | 18.2 | 19.0 | 1.06 | 21.8 | 23.0 | 24.2 | 24.4 | 23.6 | 23.8 | 22.8 | 20.6 | 23.0 | 1.02 |
| | Hum | 40.9 | 27.8 | 37.4 | 41.2 | 36.8 | 1.00 | 43.3 | 47.3 | 50.9 | 48.6 | 47.2 | 35.8 | 44.4 | 49.3 | 45.9 | 1.09 |
| | Enth | 33.1 | 32.1 | 29.4 | 31.9 | 31.6 | 1.06 | 39.7 | 44.1 | 48.6 | 48.1 | 45.5 | 40.7 | 42.5 | 39.5 | 43.6 | 1.07 |
| Avr | Tem | 19.1 | 20.5 | 17.7 | 18.1 | 18.8 | 1.06 | 22.0 | 23.2 | 24.6 | 24.7 | 23.5 | 23.5 | 22.9 | 20.5 | 23.1 | 1.02 |
| | Hum | 41.3 | 29.6 | 37.5 | 42.2 | 37.7 | 1.00 | 43.3 | 48.5 | 52.2 | 48.9 | 47.3 | 36.7 | 45.1 | 50.3 | 46.6 | 1.11 |
| | Enth | 33.5 | 31.8 | 29.7 | 32.0 | 31.7 | 1.07 | 40.2 | 45.1 | 50.4 | 49.1 | 45.3 | 40.4 | 43.1 | 39.8 | 44.2 | 1.08 |
| Avr: Average H/W: Holiday / Weekday Holy: Holiday Week: Weekday Tem: Temperature Hum: Humidity Enth: Enthalpy | | | | | | | | | | | | | | | | | |

13

<Air-conditioning control unit 120>

The air-conditioning control unit 120 acquires the indoor heat load pattern 123a and the indoor maximum power consumption 123b accumulated in the database 123, the power consumption of the various equipment (the air-conditioner 101, the heat source device 102, the lighting 103, and the other equipment 104), the enthalpy calculated by the enthalpy calculating unit 121, and the number of people in a room calculated by the number of people in room estimating unit 122, and based on these data, estimates an indoor heat load, and computes a control value and control conditions for controlling air-conditioning.

In particular, the air-conditioning control unit 120 can directly control air-conditioning according to an enthalpy of indoor air. The number of people in room estimating unit 122 estimates the number of people in a room based on the enthalpy, and the air-conditioning control unit 120 can also control air-conditioning based on the estimated number of people in a room. The air-conditioning control unit 120 enables performing comfortable air-conditioning at minimum necessary energy by changing air-conditioning control depending on whether the number of people in a room is large or small.

Fig. 2 is a diagram showing an overall configuration of the digital smart energy saving system.

As shown in Fig. 2, the pulse detector 10 is connected to a watthour meter VCT of a power company installed in high voltage receiving equipment 1, and the pulse detector 10 that indicates a power consumption is connected to the digital smart energy saving system 100. To the digital smart energy saving system 100, a remote monitoring device 70 is also connected.

Via a disconnecting switch Z-DS and a high-voltage vacuum circuit breaker VCB, from a transformer Tr1, Tr2, Tr3, Tr4 and a circuit breaker MCB of the high voltage receiving equipment 1, electric power is supplied to each load equipment 82, 84, 86, 88 through a distribution board 72, 74, 76, 78 and a circuit breaker MCB. The digital smart energy saving system 100 is also connected to the respective load equipment 82, 84, 86, 88, and digital and analog controls and monitoring, etc., are performed for the load equipment according to the kinds of the load equipment. The load equipment includes lighting equipment, respective outlets, air-conditioning equipment, and machinery equipment, etc.

The remote monitoring device 70 transmits/receives information to/from the digital smart energy saving system 100, and can monitor control and operating states of energy saving target devices and acquire daily and monthly data. In addition, the remote monitoring device can also remotely update control information by transmitting various control information to the energy saving target devices.

Hereinafter, operations of the digital smart energy saving system 100 configured as described above are described.

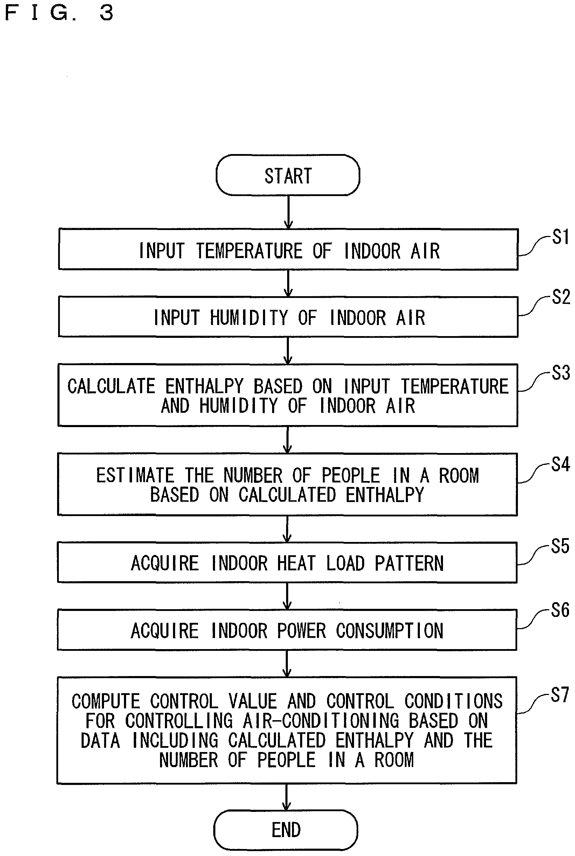

Fig. 3 is a flowchart showing air-conditioning energy saving control processing of the digital smart energy saving system 100. This flow is performed by executing a digital smart energy saving program by the arithmetic control unit 110 (refer to Fig. 1) of the digital smart energy saving system 100.

First, in Step S1, the air-conditioning control unit 120 (refer to Fig. 1) inputs a temperature of indoor air detected by the temperature sensor 111 (refer to Fig. 1).

In Step S2, the air-conditioning control unit 120 inputs a humidity of the indoor air detected by the humidity sensor 112 (refer to Fig. 1).

In Step S3, the enthalpy calculating unit 121 (refer to Fig. 1) calculates an enthalpy (total wet air heating value of the indoor air) based on the input temperature and humidity of the indoor air.

In Step S4, the number of people in room estimating unit 122 (refer to Fig. 1) estimates the number of people in a room based on the calculated enthalpy.

An enthalpy is an index correlating with a heat load. Among an outside air heat load, a human heat load, a building heat load, and a lighting heat load, also for the outside air heat load and the human heat load that vary depending on the number of people in a room, indexes are obtained in advance. Accordingly, the number of people in room estimating unit 122 can estimate the number of people in a room based on an enthalpy correlating with a heat load. For example, the relationships between the actual number of people and the enthalpy is tabularized in advance, and the number of people may be estimated from a corresponding enthalpy by referring to the table.

Because an air-conditioning environment differs between heating and cooling, air-conditioning control is desirably performed according to different indexes. For example, if control is performed on the assumption that the enthalpy and the number of people in a room have a linear correlation with each other, in a case where the number of people in a room is 0.20 people/$m^2$ under the conditions of a temperature of 26.0 °C, a humidity of 50.0%, and an enthalpy of 55.4 kJ/kg D.A. in the cooling period, and the number of people in a room is 0.20 people/$m^2$ under the conditions of a temperature of 22.0 °C, a humidity of 40.0%, and an enthalpy of 38.8.4 kJ/kg D.A. in the heating period, if the enthalpy is 44.3 (= 55.4 $\times$ 0.8) kJ/kg D.A. in the cooling period, the number of people in a room is estimated to be 0.16 (0.20 $\times$ 0.8) people/$m^2$, and if the enthalpy is 34.9 (= 38.8 $\times$ 0.9) kJ/kg D.A. in the heating period, the number of people in a room is estimated to be 0.18 (0.20 $\times$ 0.9) people/$m^2$.

As for an equipment capacity of the air-conditioning equipment, a maximum total heat load capacity of the building is calculated, which is provided by, for example:

$$\text{Total heat load capacity} = \text{outside air heat load of 50}$$
$$\text{W} \bullet \text{m}^2 + \text{human heat load of 30 W} \bullet \text{m}^2 + \text{building heat load of 20}$$
$$\text{W} \bullet \text{m}^2 + \text{lighting heat load of 30 W} \bullet \text{m}^2$$

The number of customers entering inside a building, for example, a commercial facility or the like, differs in value between hours right after opening, morning, and night during which customers are few, and peak time hours during which customers are many, between weekdays and holidays, etc. An automatic door at an entrance/exit has a function of opening for about 5 to 13 seconds, depending on the number of customers, when a customer enters the store, and then closing, and outside air flows in from the entrance/exit door almost in proportion to the number of customers entering, which produces an outside air heat load of a high temperature and a high humidity in the cooling period, and in the heating period, produces an outside air heat load of a low temperature and a low humidity. Such heat energy influences an enthalpy value of a building salesroom, and influences the number of customers in the salesroom.

An air-conditioning equipment capacity is also computed for an environment of the salesroom in the commercial facility by calculating a total heat load. When conditions of a temperature of 26 °C, a humidity of 50%, and an enthalpy of 54.2 kJ/kg D.A. for the cooling period, and conditions of a temperature of 22 °C, a humidity of 40%, and an enthalpy of 38.8 kJ/kg D.A. for the heating period are set as standards for operation of an equipment capacity, this becomes a basic equipment capacity of air-conditioning equipment. As a precondition for calculating a building total heat load, the number of people per area of a building salesroom expected as a coefficient is, for example, 0.2 people per 1 m$^2$ of the salesroom area, normally. An air volume that one person breathes is 20 m$^3$ per hour.

Then, when the building salesroom area is 2000 m$^2$, the number of people in a room and a necessary outside air volume are as follows.

$$\text{The number of people in a room} = (2000 \text{ m}^2 \text{ salesroom area}$$
$$\times 0.2 \text{ people}) = 400 \text{ people}$$

And a respiratory volume, that is, a necessary outside air volume is:

$$\text{Outside air volume} = (400 \text{ people} \times 20 \text{ m}^3/\text{h}) = 8,000 \text{ m}^3/\text{h}$$

That is, if the number of people in a room is 400, a necessary outside air volume is 8,000 m$^3$/h. For the cooling period, conditions of a salesroom temperature of 26 °C, a humidity of 50%, and an enthalpy of 55.4 kJ/kg D.A., and for the heating period, conditions of a salesroom temperature of 22 °C, a humidity of 40%, and an enthalpy of 38.8 kJ/kg D.A. are used as standards.

With these standards, an indoor $CO_2$ value of the building is set to 900 ppm that is a safe $CO_2$ value.

For example, in the cooling period, a detected enthalpy value of 55.4 kJ/kg D.A. inside the building corresponds to the number of people in a room of 400, an outside air volume of 8,000 m$^3$/h, and a $CO_2$ value of 900 ppm. For example, if the detected enthalpy value is 40 kJ/kg D.A.,

$$CO2 \text{ coefficient} = 40 \text{ kJ/kg D.A.} / 55.4 \text{ kJ/kg D.A.} = 0.722$$

is an operating coefficient of outside air processing equipment (that is, ventilation equipment),

$$CO2 \text{ value} = (0.722 \times 900 \text{ ppm}) = 650 \text{ ppm,}$$

and

$$\text{Outside air volume} = \text{normal outside air volume of } 8,000$$

$$\text{m}^3 \times \text{CO2 coefficient of } 0.722 = 5,776 \text{ m}^3$$

is necessary, so that
a control volume is reduced by:

$$\text{Control volume} = (8,000 \text{ m}^3 - 5,776 \text{ m}^3) = 2,224 \text{ m}^3,$$

that is,
a necessary outside air volume is reduced by this much, and a control coefficient of the outside air processing equipment is provided as:

$$\text{Control coefficient} = \text{coefficient of } 1.0 - \text{operating}$$

$$\text{coefficient of } 0.722 = 0.278$$

This shows energy saving that can be achieved with respect to the outside air processing equipment. The same arithmetic operation applies to the heating period.

As described above, in the present embodiment, throughout the cooling and heating periods, the number of people in a room and necessary outside air volume are computed based on detected enthalpy values, and a control coefficient for the outside air processing equipment is computed in real time as well as that for the air-conditioning equipment.

To verify the operation of a CO2 value based on an enthalpy value, for example, when a CO2 value at the above-described enthalpy value of 40 kJ/kg D.A. is detected by the CO2 sensor, and if the result is 650 ppm, a control coefficient for the outside air processing equipment in a salesroom in question inside the building is:

$$\text{Control coefficient} = (\text{standard CO2 value of } 900 \text{ ppm} -$$

$$\text{detected CO2 value of } 650 \text{ ppm}) / \text{standard CO2 value of } 900 \text{ ppm}$$

$$= 0.278$$

This shows energy saving that can be achieved with respect to the outside air processing equipment as well as energy saving with respect to the air-conditioning equipment.

The digital smart energy saving system 100 may comprise a CO2 concentration sensor 113, and can complement estimation of the number of people in a room based on an enthalpy with a CO2 concentration.

In Step S5, the air-conditioning control unit 120 acquires an indoor heat load pattern. In detail, the air-conditioning control unit 120 reads the indoor heat load pattern 123a from the database 123. As described above, an outside air heat load, a human heat load, a building heat load, a lighting heat load, and a device heat load, etc., applied at an event, etc., are provided in the heat load calculation sheet, and the indoor heat load pattern 123a being a total of these loads is read. The indoor heat load pattern 123a is an indoor maximum heat load.

In Step S6, the air-conditioning control unit 120 acquires an indoor power consumption. In detail, a maximum power consumption of various devices installed in a room is calculated. For example, as shown in Fig. 1, when the air-conditioner 101, the heat source device 102, the lighting 103, and the other equipment 104 are installed, a total of rated power consumption of these devices is defined as an indoor maximum power consumption in the room in question. The air-conditioning control unit 120 acquires respective power consumption of the air-conditioner 101, the heat source device 102, the lighting 103, and the other equipment 104, and a power consumption from the pulse detector 10 (refer to Fig. 2).

In Step S7, the air-conditioning control unit 120 acquires the indoor heat load pattern 123a and the indoor maximum power consumption 123b accumulated in the database 123, power consumption of various devices (the air-conditioner 101, the heat source device 102, the lighting 103, and the other equipment 104), an enthalpy calculated by the enthalpy calculating unit 121, and the number of people in a room calculated by the number of people in room estimating unit 122, and based on these data, estimates an indoor heat load, and computes a control value and control conditions for controlling air-conditioning. The air-conditioning control unit 120 transmits the estimated indoor heat load value to the air-conditioning control device 131 and ends the processing of this flow. The air-conditioning control device 131 receives the control value and control conditions transmitted from the air-conditioning control unit 120, and controls control target devices including the air-conditioner 101 and the heat source device 102, etc.

In this way, the air-conditioning control unit 120 calculates an estimated indoor heat load value by using the indoor heat load pattern 123a, the indoor maximum power consumption 123b, power consumption of the various devices, and the current number of people in a room acquired from the number of people in room estimating unit 122. The indoor heat load greatly depends on the number of people in a room, so that in the present embodiment, the number of people in room estimating unit 122 estimates the number of people in a room based on an enthalpy, the air-conditioning control unit 120 more accurately estimates a heat load by using the number of people in a room, and by reflecting this highly accurate heat load estimation result in air-conditioning, realizes highly effective air-conditioning energy saving control.

[Application Example]

Generally, an operating rate of air-conditioning equipment in a building is greatly influenced in both cooling and heating times by an outside air temperature and humidity of the outside of the building and the number of people accommodated in the building.

A $CO_2$ concentration in a building salesroom decreases when the number of customers entering is small, and increases when the number of customers entering is large. Under present circumstances, there is a great gap from the statutory $CO_2$ concentration of 1000 ppm, and electric power is consumed more than necessary in many cases.

Therefore, in the present embodiment, the number of people in a room is estimated based on an enthalpy of indoor air, and air-conditioning control is performed. The number of people in a room is the number of people accommodated in the building (the number of customers entering and employees) . In the present embodiment, the number of people in a room is estimated based on an enthalpy of indoor air. However, the digital smart energy saving system 100 comprises the $CO_2$ concentration sensor 113, and can complement the result of estimation of the number of people in a room based on the enthalpy with a $CO_2$ concentration.

As described above, according to the present embodiment, the digital smart energy saving system 100 comprises the enthalpy calculating unit 121 that inputs a temperature and a humidity of indoor air, and based on the input temperature and humidity of the indoor air, calculates an enthalpy being a total wet air heating value of the indoor air, and the air-conditioning control unit 120 that controls air-conditioning based on the calculated enthalpy of the indoor air.

Accordingly, air-conditioning control can be changed according to the calculated enthalpy of the indoor air, and energy saving can be realized.

In the present embodiment, the digital smart energy saving system 100 comprises the number of people in room estimating unit 122 that estimates the number of people in a room based on an enthalpy of indoor air, and the air-conditioning control unit 120 controls air-conditioning based on the calculated number of people in a room.

Accordingly, air-conditioning control can be changed depending on whether the number of people in a room is large or small, and comfortable air-conditioning is realized at minimum necessary energy.

Grasping of the number of people in a room is generally difficult or requires a high cost. For example, when image processing using an infrared sensor and/or a camera that detect entering and leaving of people is used as in a conventional example, high costs are required. On the other hand, in the present embodiment, an enthalpy calculated from a temperature and a humidity is used, so that grasping of the number of people in a room can be easily realized at low cost. Here, the sensor that detects a temperature and a humidity of indoor air is provided in air-conditioning equipment, etc., inside a room in many cases. In this case, introduction of a new sensor can be avoided, so that the cost can be reduced.

In the conventional example, even if the number of people in a room can be grasped, a heat load differs between an adult and a child, so that its use for optimal air-conditioning control is improper. On the other hand, in the present embodiment, an enthalpy calculated from a temperature and a humidity is used. The enthalpy is an index correlating with a heat load, so that no gap in the index enables accurately realizing optimal air-conditioning control.

In the present embodiment, the digital smart energy saving system 100 comprises the $CO_2$ concentration sensor 113 that measures a $CO_2$ concentration, and the number of people in room estimating unit 122 uses a measured $CO_2$ concentration.

Accordingly, a heat load can be more highly accurately estimated, and by reflecting a result of this highly accurate estimation of a heat load in air-conditioning control, highly effective air-conditioning energy saving control can be realized.

The description given above is the illustration of a preferred embodiment of the present invention, and the scope of the present invention is not limited to this, but includes other modifications and application examples without departing from the spirit of the present invention described in the claims.

For example, in the heating period, a lower limit temperature may be set, and in the cooling period, an upper limit temperature may be set, and further, an upper limit CO2 concentration may be set, and when a temperature or concentration exceeds the set limit, by releasing energy saving control, an environment can be comfortably controlled without excessive energy saving.

The inside of a room may be networked by Wi-Fi, etc., and an indoor temperature, humidity, and enthalpy, and additionally, an energy state of the building, etc., may be transmitted to a mobile terminal that a related person carries with him/her so that the related person can refer to the information at any time, and when the temperature or concentration exceeds the set limit, by notifying this to the mobile terminal, the related person can respond in real time.

The above-described embodiment examples describe the present invention in detail in an understandable way, and the present invention is not necessarily limited to one comprising all configurations described above. Part of a configuration of an embodiment example can be replaced by a configuration of another embodiment example, and to a configuration of an embodiment example, a configuration of another embodiment example can be added. Part of a configuration of each embodiment example can be subjected to addition of other configurations, deletion, and replacement.

In the embodiment described above, the names of a digital smart energy saving system and a digital smart energy saving method are used, however, these are used for convenience of description, and the name of the system may be replaced by an energy saving control apparatus, and the name of the method may be replaced by an air-conditioning management method, etc.

The air-conditioning energy saving control processing described above is also realized by a program to operate this air-conditioning energy saving control processing. This program is stored in a computer-readable storage medium.

The storage medium in which the program is recorded may be a ROM itself of this digital smart energy saving system, or a CD-ROM, etc., that can be read by being inserted in a program reading device such as a CD-ROM drive provided as an external storage device.

The storage medium may be a magnetic tape, a cassette tape, a flexible disk, a hard disk, and an MO/MD/DVD, etc., or a semiconductor memory.

[Industrial Applicability]

A digital smart energy saving system, method, and program according to the present invention produces a great usage effect by being applied to a digital smart energy saving system that manages energy such as electric power to be consumed in a building in an optimal state to realize energy saving.

[Reference Signs List]

100 Digital smart energy saving system
101 Air-conditioner
102 Heat source device
103 Lighting (lighting equipment)
104 Other equipment
110 Arithmetic control unit
111 Temperature sensor
112 Humidity sensor
113 CO2 concentration sensor (CO2 concentration measuring means)
120 Air-conditioning control unit (air-conditioning control means)
121 Enthalpy calculating unit (enthalpy calculating means)
122 Number of people in room estimating unit (number of people in room estimating means)
123 Database
123a Indoor heat load pattern
123b Indoor maximum power consumption data
131 Air-conditioning control device (air-conditioning control means)

**Claims**

**1.** A digital smart energy saving system comprising:

18

an enthalpy calculating means that inputs a temperature and a humidity of indoor air and calculates an enthalpy being a total wet air heating value of the indoor air based on the input temperature and humidity of the indoor air; and

an air-conditioning control means that controls air-conditioning based on the enthalpy of the indoor air calculated by the enthalpy calculating means.

2. The digital smart energy saving system according to Claim 1, wherein the air-conditioning control means controls air-conditioning and ventilation based on the enthalpy.

3. The digital smart energy saving system according to Claim 1, comprising:

a number of people in room estimating means that estimates a number of people in a room based on the enthalpy of the indoor air calculated by the enthalpy calculating means, wherein
the air-conditioning control means controls air-conditioning based on the number of people in the room calculated by the number of people in room estimating means.

4. The digital smart energy saving system according to Claim 3, comprising:

a $CO_2$ concentration measuring means that measures an indoor $CO_2$ concentration, wherein
the number of people in room estimating means uses the $CO_2$ concentration measured by the $CO_2$ concentration measuring means.

5. The digital smart energy saving system according to Claim 1 or 3, wherein when the input temperature of the indoor air exceeds a set temperature, the air-conditioning control means releases its control.

6. A digital smart energy saving method comprising:

an enthalpy calculating step of inputting a temperature and a humidity of indoor air and calculating an enthalpy being a total wet air heating value of the indoor air based on the input temperature and humidity of the indoor air; and
a control step of controlling air-conditioning based on the enthalpy of the indoor air calculated by the enthalpy calculating step.

7. A program to make a computer function as:
a digital smart energy saving system comprising an enthalpy calculating means that inputs a temperature and a humidity of indoor air and calculates an enthalpy being a total wet air heating value of the indoor air based on the input temperature and humidity of the indoor air; and an air-conditioning control means that controls air-conditioning based on the enthalpy of the indoor air calculated by the enthalpy calculating means.

FIG. 1

EP 3 511 638 A1

FIG. 2

21

# F I G. 3

```
            ┌─────────────┐
            │    START    │
            └──────┬──────┘
                   ↓
┌──────────────────────────────────────────┐  S1
│     INPUT  TEMPERATURE  OF  INDOOR  AIR   │
└──────────────────────┬───────────────────┘
                       ↓
┌──────────────────────────────────────────┐  S2
│      INPUT  HUMIDITY  OF  INDOOR  AIR     │
└──────────────────────┬───────────────────┘
                       ↓
┌──────────────────────────────────────────┐  S3
│ CALCULATE  ENTHALPY  BASED  ON  INPUT     │
│ TEMPERATURE  AND  HUMIDITY  OF  INDOOR    │
│ AIR                                       │
└──────────────────────┬───────────────────┘
                       ↓
┌──────────────────────────────────────────┐  S4
│ ESTIMATE  THE  NUMBER  OF  PEOPLE  IN  A  │
│ ROOM  BASED  ON  CALCULATED  ENTHALPY     │
└──────────────────────┬───────────────────┘
                       ↓
┌──────────────────────────────────────────┐  S5
│    ACQUIRE  INDOOR  HEAT  LOAD  PATTERN   │
└──────────────────────┬───────────────────┘
                       ↓
┌──────────────────────────────────────────┐  S6
│   ACQUIRE  INDOOR  POWER  CONSUMPTION     │
└──────────────────────┬───────────────────┘
                       ↓
┌──────────────────────────────────────────┐  S7
│ COMPUTE  CONTROL  VALUE  AND  CONTROL     │
│ CONDITIONS  FOR  CONTROLLING              │
│ AIR-CONDITIONING  BASED  ON  DATA         │
│ INCLUDING  CALCULATED  ENTHALPY  AND      │
│ THE  NUMBER  OF  PEOPLE  IN  A  ROOM      │
└──────────────────────┬───────────────────┘
                       ↓
            ┌─────────────┐
            │     END     │
            └─────────────┘
```

## INTERNATIONAL SEARCH REPORT

International application No.

PCT/JP2016/076778

### A. CLASSIFICATION OF SUBJECT MATTER
*F24F11/02*(2006.01)i

According to International Patent Classification (IPC) or to both national classification and IPC

### B. FIELDS SEARCHED

Minimum documentation searched (classification system followed by classification symbols)
F24F11/02

Documentation searched other than minimum documentation to the extent that such documents are included in the fields searched

| | | |
|---|---|---|
| Jitsuyo Shinan Koho | 1922–1996 | Jitsuyo Shinan Toroku Koho 1996–2016 |
| Kokai Jitsuyo Shinan Koho | 1971–2016 | Toroku Jitsuyo Shinan Koho 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | US 2003/0181158 A1 (Edwards Systems Technology, Inc.),<br>25 September 2003 (25.09.2003),<br>paragraphs [0002] to [0048]; fig. 1 to 7<br>(Family: none) | 1-2,6-7<br>3-5 |
| Y<br>A | US 2012/0083926 A1 (Johnson Controls Technology Co.),<br>05 April 2012 (05.04.2012),<br>paragraphs [0002] to [0102]; fig. 1 to 16<br>(Family: none) | 1-2,6-7<br>3-5 |
| Y<br>A | JP 2015-148413 A (Hitachi, Ltd.),<br>20 August 2015 (20.08.2015),<br>paragraphs [0022], [0060], [0070] to [0071]<br>& WO 2015/118779 A1 | 1-2,6-7<br>3-5 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 November 2016 (02.11.16) | Date of mailing of the international search report<br>15 November 2016 (15.11.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/076778 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | US 2013/0282183 A1  (Transformative Wave Technologies LLC),<br>24 October 2013 (24.10.2013),<br>paragraphs [0012], [0062]<br>& WO 2011/022379 A1     & EP 2467762 A<br>& AU 2010284375 A        & CA 2771280 A | 1-7 |
| A | JP 2013-217634 A  (Taisei Corp.),<br>24 October 2013 (24.10.2013),<br>paragraphs [0001] to [0056]; fig. 1 to 9<br>(Family: none) | 1-7 |

Form PCT/ISA/210 (continuation of second sheet) (January 2015)

**REFERENCES CITED IN THE DESCRIPTION**

**Patent documents cited in the description**

- JP 2015152179 A